# EUROPEAN PATENT APPLICATION

(11) **EP 2 610 102 A2**
(43) Date of publication of application: **03.07.2013**
(21) Application number: 12199320.8
(22) Date of filing: 24.12.2012
(51) Int. Cl.: B60L 11/18

(54) **Controller for vehicle and vehicle including the controller**

(30) Priority: 28.12.2011 JP 2011289723
(71) Applicant: Hitachi Automotive Systems, Ltd., Hitachinaka-shi Ibaraki 312-8503 (JP)
(72) Inventor: Kojima, Takao, Tokyo, 100-8220 (JP)
(74) Representative: MERH-IP Matias Erny Reichl Hoffmann

(57) **Abstract**

Provided are a controller (30) for vehicle controlling a temperature state of a storage device, especially enabling effective temperature rise of a storage device (20) from a low-temperature state, and a vehicle including such a controller (30). The controller (30) for vehicle includes: a driving motor, first storage device that exchanges electrical energy with the driving motor (10); temperature detection means that detects a temperature of the first storage device; second storage device that exchanges electrical energy with the first storage device; and an electric power converter that controls exchange of electrical energy between the first storage device and the second storage device. When the temperature detection means detects a temperature lower than or equal to a predetermined value and the driving motor (10) performs a regenerating operation, the electric power converter supplies electrical energy of the second storage device to the first storage device.

## Description

### BACKGROUND OF THE INVENTION

### Field of the Invention

The present invention relates to a controller for vehicle having storage means, for example, a controller for vehicle having storage means such as a battery, the controller being equipped with an optimum function for warming the storage means, and relates to a vehicle including such a controller.

### Background Art

Conventionally, a vehicle having at least a motor (a driving motor) as a driving source includes a chargeable and dischargeable storage means (battery) as a power supply. Batteries have a property of lowering its charge/discharge characteristics with decrease in battery temperature. Therefore, after a vehicle is stopped for a long time at a site where the outside temperature becomes low during winter or at cold regions or the like, in order to restart the vehicle for cold-start, a controller is known to rise the temperature of the battery forcibly.

JP Patent Publication (Kokai) No. 2005-176483 A, for example, discloses such a controller for vehicle including: a driving motor that exchanges electric power with a battery; and an electric power converter that steps down the output voltages from the battery and the driving motor for outputting. When the battery temperature is a predetermined value or lower and during a regenerating operation of the driving motor, the controller controls to suppress the output from the electric power converter, i.e., to decrease the amount of regeneration energy flowing into the electric power converter, thus increasing regeneration energy supplied to the battery compared with the case of not suppressing the output from the electric power converter. As a result, the amount of self-heating by internal resistance of the battery relatively increases and the rise of the battery temperature is promoted. This Patent Publication discloses another controller to increase or decrease the output from the electric power converter depending on the operating state of the driving motor (driving operation or regenerating operation), while increasing or decreasing the output from electrical load connected to the output side of the electric power converter, thereby increasing the amount of self-heating of the battery.

### SUMMARY OF THE INVENTION

The conventional controller has the following problem. When electric power is supplied to the electrical load only via the electric power converter, the output from the electric power converter cannot be decreased more than necessary because the electric power converter supplies electric power to electrical load necessary to the driving of the vehicle. Therefore, electric power cannot be input to the battery sufficiently from the driving motor in the regeneration state, and so the amount of self-heating obtained will be decreased.

In another configuration including an auxiliary battery (e.g., a 12 (V) battery) in parallel to the electrical load, i.e., in the configuration where electric power is supplied to the electrical load from the auxiliary battery and the electric power converter, the following problem occurs. The output from the electric power converter depends on the power consumption of the electrical load and the remaining battery capacity of the auxiliary battery during a driving operation. Therefore when the electrical load consumes less electric power and the auxiliary battery is close to the full state, an enough effect cannot be obtained to increase the battery temperature.

In view of the aforementioned problems of the conventional controllers, it is an object of the invention to provide a controller for vehicle for controlling the temperature state of a storage device, especially a controller capable of effectively increasing the temperature of the storage device in a low-temperature state, and provide a vehicle including such a controller.

In order to fulfill the object, a controller for vehicle according to the present invention includes: a driving motor, first storage means that exchanges electrical energy with the driving motor; temperature detection means that detects a temperature of the first storage means; second storage means that exchanges electrical energy with the first storage means; and/or an electric power converter that controls exchange of electrical energy between the first storage means and the second storage means. When the temperature detection means detects a temperature lower than or equal to a predetermined value and the driving motor performs a regenerating operation, the electric power converter supplies electrical energy of the second storage means to the first storage means.

In the thus configured controller for vehicle of the present invention, the temperature detection means detects a temperature of the first storage means to determine whether the storage means is in a low-temperature state requiring warming or not, and determination is made as to whether the driving motor is in a driving state or a regeneration state. When the driving motor is in a regeneration state, the electric power converter operates in a forward direction to supply electrical energy of the second storage means to the first storage means. When the driving motor is in a driving state, the electric power converter operates in a backward direction to supply electrical energy of the first storage means to the second storage means. Thereby, self-heating can be promoted due to internal resistance of the storage means, and the storage means can be warmed quickly.

### Effects of the Invention

In accordance with the invention, when the driving motor performs a regenerating operation, the power-feeding direction of the electric power converter is the direction to charge the first storage means that exchanges electric power with the driving motor. As a result, the charge current of the first storage means can be increased more than the regeneration current of the driving motor, and therefore self-heating can be promoted due to internal resistance of the first storage means and the first storage means can be warmed quickly.

### BRIEF DESCRIPTION OF THE DRAWINGS

Fig. 1 illustrates the overall configuration of an electric vehicle including a controller for vehicle according to one embodiment of the present invention.
Fig. 2 is a control flowchart of a controller for vehicle of Fig. 1.
Fig. 3 is a timing diagram illustrating the driving states of an electric vehicle controlled by the controller for vehicle of Fig. 1.
Fig. 4 illustrates the overall configuration of an electric vehicle including a controller for vehicle according to another embodiment of the present invention.
Fig. 5 is a timing diagram illustrating the driving states of an electric vehicle controlled by the controller for vehicle of Fig. 4.
Fig. 6 illustrates the overall configuration of an electric vehicle including a controller for vehicle according to still another embodiment of the present invention.
Fig.7 is a control flowchart of a controller for vehicle of Fig. 6.
Fig. 8 is a timing diagram illustrating the driving states of an electric vehicle controlled by the controller for vehicle of Fig. 6.

### DESCRIPTION OF A PREFERRED EMBODIMENT OF THE INVENTION

### Embodiments

### [Embodiment 1]

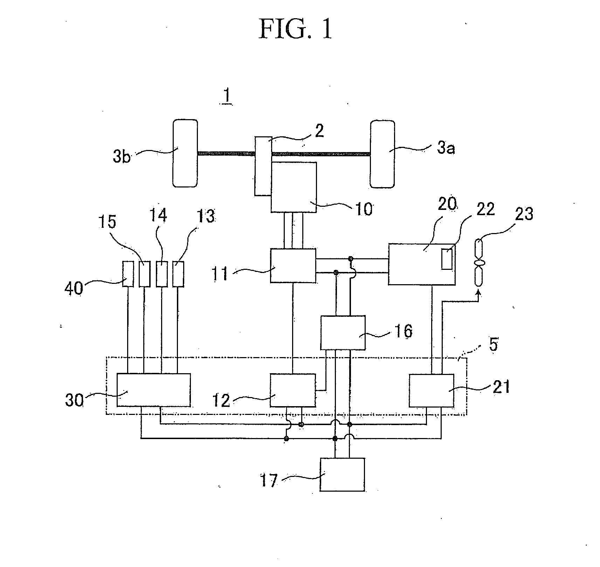

In the following, an embodiment of a controller for vehicle according to the present invention is described in details with reference to the drawings. Fig. 1 illustrates the overall configuration of an electric vehicle including a controller for vehicle according to the present embodiment. In Fig. 1, an electric vehicle 1 is driven by a driving motor 10, and is driven by transmitting a driving force from the driving motor 10 to drive wheels 3a, 3b of the electric vehicle 1 via a reduction gear 2. The electric vehicle 1 includes a storage device 20 as first storage means that exchanges electrical energy with the driving motor 10 and a storage device 17 as second storage means that exchanges electrical energy with the storage device 20. An electric power converter 16 is provided between the storage device 20 and the storage device 17 to control exchange of electrical energy between the storage device 20 and the storage device 17.

The electric vehicle 1 includes a vehicle controller 30, a motor ECU 12 and a battery ECU 21, and electric power in the storage device 17 is supplied to the vehicle controller 30, the motor ECU 12 and the battery ECU 21. The vehicle controller 30 receives signals from an outside temperature sensor 40, an accelerator pedal sensor 13, a brake pedal sensor 14 and a wheel speed sensor 15. An inverter 11 is provided between the motor ECU 12 and the driving motor 10. The vehicle controller 30, the motor ECU 12 and the battery ECU 21 may be unified as an integrated ECU 5.

The battery ECU 21 calculates a remaining battery capacity (SOC: State of Charge) based on a voltage between terminals of the storage device 20, a charge/discharge current of the storage device 20 and the summation of the charge/discharge current, and acquires a battery temperature through a battery temperature sensor 22. The battery ECU 21 further calculates and manages information on the storage device 20 such as battery life and degradation level (SOH: State of Health) and outputs the information to other electronic control units (ECUs) via a vehicle network (not illustrated). The battery ECU 21 still further outputs an operating signal to a battery fan 23 on the basis of the battery temperature sensor 22. Exemplary storage device 20 may be a lithium ion battery or a nickel hydride battery.

The vehicle controller 30 generates a control signal relating to the braking, the driving and the like of the electric vehicle 1 on the basis of information acquired via the vehicle network and signals from the outside temperature sensor 40, the accelerator pedal sensor 13, the 14 and the wheel speed sensor 15 connected to the vehicle controller 30. The drive control signal generated by the vehicle controller 30 is output to the motor ECU 12 via the vehicle network.

The motor ECU 12 calculates an instruction value to control the driving and the regenerating operation of the driving motor 10 in accordance with an instruction from the vehicle controller 30, and outputs a PWM signal to the inverter 11. The driving motor 10 may be a three-phase DC brushless motor, for example, and in order to drive the vehicle, d-axis and q-axis current values for motor vector control are calculated in accordance with a driving signal (e.g., target driving torque) input from the vehicle controller 30, and based on these current values, a target current for each phase of the driving motor 10 is calculated for each operating period of the ECU.

The motor ECU 12 detects an actual current of each phase using a current sensor (not illustrated) and outputs a pulse signal (PWM signal) to the inverter 11 on the basis of the target current and the actual current. Not only for driving but also for deceleration based on the output from the accelerator pedal sensor 13 and the brake pedal sensor 14, the motor ECU 12 outputs a PWM signal to the inverter 11 to control regeneration torque in accordance with an instruction from the vehicle controller 30, thus controlling the deceleration rate of the electric vehicle 1 and recovering kinetic energy of the car body as electrical energy.

The inverter 11 exchanges electrical energy between the storage device 20 and the driving motor 10 in accordance with a PWM signal input from the motor ECU 12. During driving, the inverter 11 converts DC output from the storage device 20 into three-phase AC output to supply electrical energy to the driving motor 10. During regeneration braking, the inverter 11 converts three-phase AC electric power generated by the driving motor 10 into DC electric power to supply the electric power to the storage device 20 for charging.

In this way, the driving motor 10 can generate a driving force in accordance with a driving instruction of the vehicle controller 30, and the driving force of the driving motor 10 is transmitted to the drive wheels 3a, 3b of the electric vehicle 1 via the reduction gear 2, so that the electric vehicle 1 can be driven. When a deceleration instruction is issued, braking system (not illustrated) to generate a friction force at wheels by leg-power of a driver via fluid such as hydraulic pressure or by an electric method and the above regeneration braking force can be combined for use to decelerate or stop the vehicle.

The storage device 17 is a power supply for controllers such as the motor ECU 12, the battery ECU 21 and the vehicle control ECU 30 and auxiliary devices such as lighting devices, and has different capacity and voltage from those of the storage device 20. Preferable examples of the storage device 17 include a 12[V] battery (lead-acid battery).

The electric power converter 16 is controlled by the motor ECU 12, and is equipped with a bidirectional electric power conversion function capable of controlling the exchange of electric power (electrical energy) between the storage device 20 and the storage device 17. The electric power converter 16 may be a bidirectional DC/DC converter, for example. Letting that the voltage between terminals Va of the storage device 20 and the voltage between terminals Vb of the storage device 17 have a relation of Va>Vb, a step-down operation of the electric power converter 16 causes transformation of Va into Vb, whereby electrical energy in the storage device 20 can be stored in the storage device 17. Conversely, a step-up operation causes transformation of Vb into Va, whereby electrical energy in the storage device 17 can be stored in the storage device 20. In the following description of the present application, the output directions of the electric energy converted by the electric power converter 16 include a forward direction that is the direction of taking electrical energy from the storage device 20, and a backward direction that is the direction of supplying electrical energy to the storage device 20. In the above example, the step-down operation is the forward direction and the step-up operation is the backward direction. In the case of Va<Vb, however, the step-up operation is the forward direction and the step-down operation is the backward direction.

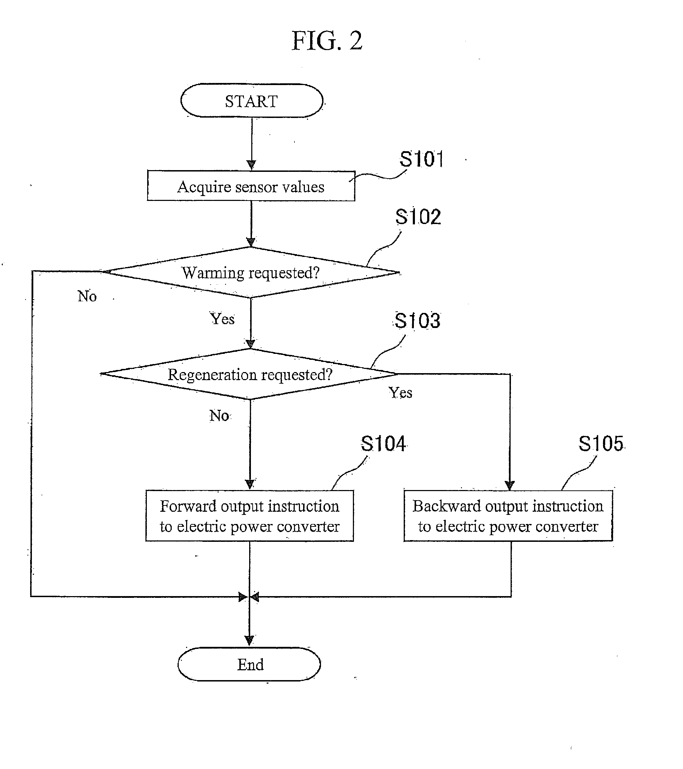

Referring next to the flowchart of Fig. 2, the operation of the electric power converter 16, especially a method for controlling the electric power converter 16 depending on the temperature state of the storage device 20 and the operating state of the driving motor 10 is described below.

Firstly, at Step S101, a value of each vehicle-mounted sensor is acquired. In this processing, values of the sensors relating to the driving state of the electric vehicle 1 such as various temperature sensors including the battery temperature sensor 22 and the wheel speed sensor 15 and estimated values for the vehicle state that are calculated based on the sensor values are acquired via the vehicle network.

On the basis of this information, at Step S102, determination is made as to whether the storage device 20 has to be warmed or not. This determination may be made based on whether the output from the battery temperature sensor 22 is smaller than or equal to a predetermined threshold (predetermined value) having hysteresis or not. When the determination is affirmative, the procedure proceeds to Step S103, and when the determination is negative, the procedure ends once.

The threshold may be decided at an optimum temperature depending on the temperature characteristics of the storage device 20 by a preliminary experiment performed beforehand, for example. As the temperature where the charge characteristics of the storage device 20 start to deteriorate, a value of 0 degrees centigrade or lower may be selected, for example.

When an affirmative determination is made at Step S102, determination is made as to whether there is a regeneration request or not at Step S103, i.e., whether the operation of the driving motor 10 is a driving operation or a regenerating operation. When an affirmative determination is made, i.e., it is determined that there is a regeneration request, the procedure proceeds to Step S105. On the other hand, when a negative determination is made, i.e., it is determined that there is a driving request, the procedure proceeds to Step S104. The determination as to the presence or not of a regeneration request may be made by using a sign of target motor torque that the vehicle control ECU 30 instructs to the motor ECU 12 on the basis of the outputs from the accelerator pedal sensor 13 and the brake pedal sensor 14, for example. Preferably, the determination may be made while providing a dead zone so as to prevent hunting.

At Step S104 and Step S105, an electric power conversion direction (output direction) is set as an operating mode of the electric power converter 16. During a driving operation, at Step S104, forward direction output (the direction where the storage device 20 discharges) is set. On the other hand, during a regenerating operation, at Step S105, backward direction output (the direction where the storage device 20 is charged) is set.

The above-stated series of processing is performed to set an operating mode of the electric power converter 16, and this processing ends once. Herein, this processing is repeatedly executed in predetermined cycles so as to set the operating mode of the electric power converter 16 in predetermined cycles.

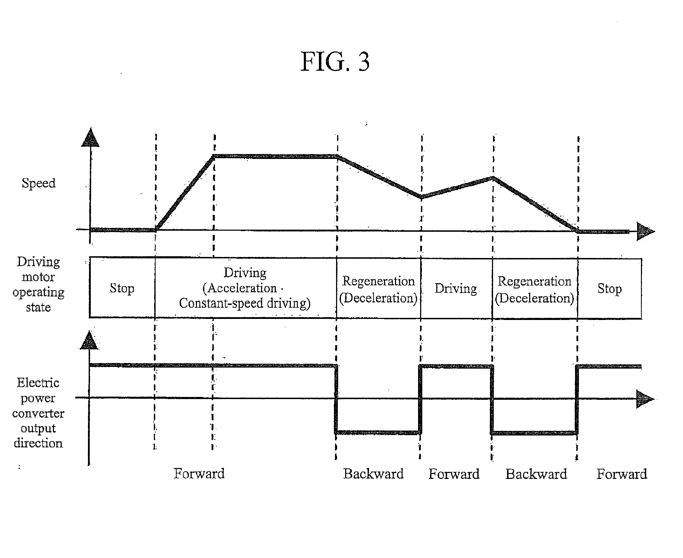

Fig. 3 schematically illustrates the driving states of the electric vehicle 1 and the output directions of the electric power converter 16 under the control in accordance with the flowchart of the present embodiment. During stopping and driving of the electric vehicle 1, the electric power converter 16 is set in the forward direction, and during regeneration (deceleration), the electric power converter 16 is set in the backward direction. When returning to the driving or the stopping operation, the electric power converter 16 is set as a forward direction operation.

As stated above, according to the electric power converter 16 of the controller for vehicle of Embodiment 1, when the storage device 20 is in a low-temperature state, the output direction of the electric power converter 16 is set depending on the driving or regenerating operation of the driving motor 10. Therefore, the charge/discharge current of the storage device 20 is the current obtained by adding the driving or regeneration current of the driving motor 10 and the charge/discharge current of the storage device 17 via the electric power converter 16. Accordingly, compared with the case of not switching the operating mode of the electric power converter 16, self-heating of the storage device 17 due to internal resistance thereof can be promoted, and the storage device 17 and the storage device 20 can be warmed quickly.

Additionally, during regeneration of the driving motor 10, electric power is supplied from the storage device 17 to the storage device 20, whereby the remaining battery capacity of the storage device 17 can be reduced temporarily. Even when electrical load such as auxiliary devices using the storage device 17 as a power supply is less at the time of switching of the driving motor 10 from the regeneration state to the driving state, charge current to the storage device 17 can be sufficiently secured, and therefore discharge current of the storage device 20 can be increased. As a result, self-heating of the storage device 20 can be promoted, and the storage device 17 and the storage device 20 can be warmed quickly as well.

### [Embodiment 2]

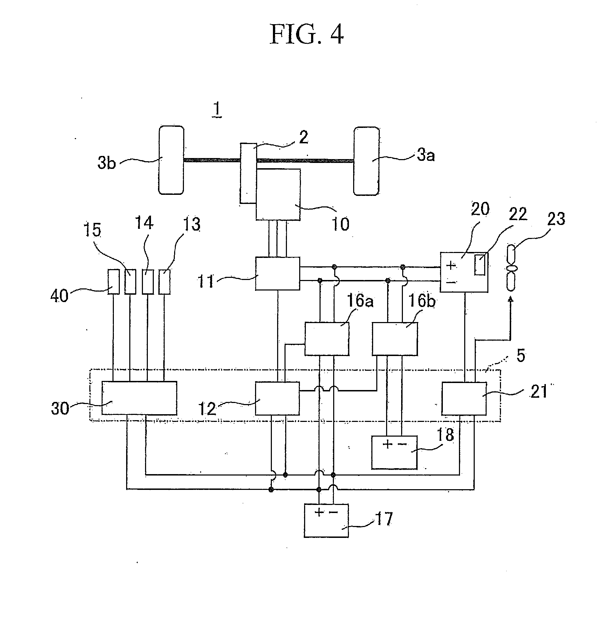

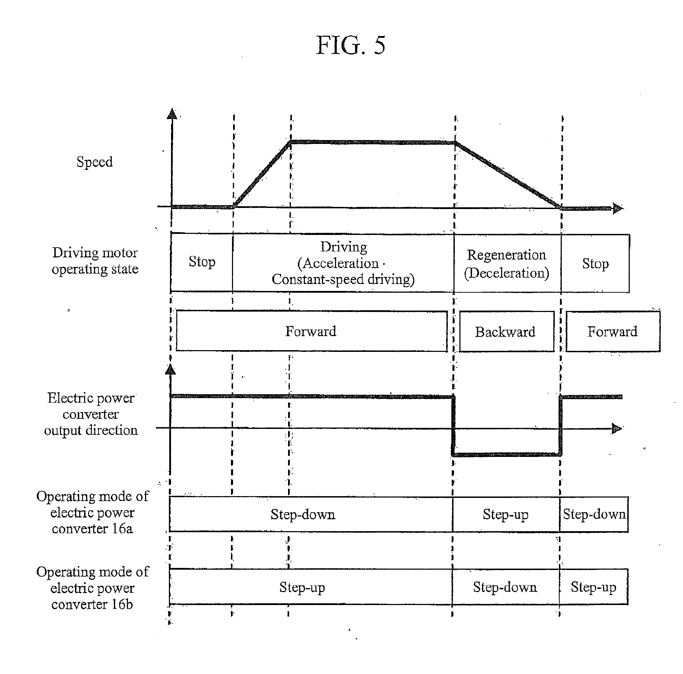

In the present embodiment, an electric vehicle includes a storage device 20 as first storage means that exchanges electrical energy with a driving motor 10 and a plurality of storage devices 17, 18 as second storage means that exchanges electrical energy with the storage device 20. Referring to Fig. 4 and Fig. 5, the following describes a plurality of electric power converters 16a, 16b that control exchange of electrical energy between the storage device 20 and the storage devices 17 and 18, and a method for controlling the electric power converters in an electric vehicle including them and an operation of the vehicle.

Fig. 4 illustrates the overall configuration of a controller for vehicle that is Embodiment 2 of the present invention and an electric vehicle including the controller, which includes the storage device 18 and the electric power converter 16b in addition to the configuration of Fig. 1. In this configuration, the electric power converter 16a controls the storage device 17 and the electric power converter 16b controls the storage device 18. In Fig. 4, descriptions on elements with the same reference numerals as those in Fig. 1 are omitted because they have the same functions. The storage devices 17, 18 and 20 may be of different types and have different capacity and voltages between terminals, and preferably the storage device 20 has capacity larger than that of the storage devices 17 and 18. Examples of the storage device 18 include an electric double-layer capacitor (EDLC). In the present embodiment, the voltages between terminals Va, Vb and Vc of the storage devices 20, 17 and 18, respectively, have the relations of Va>Vb and Va<Vc.

Similarly to Embodiment 1, in the present embodiment as well, the output direction of the electric power converters 16a and 16b is decided in accordance with the flowchart of Fig. 2, and accordingly the electric power converters 16a and 16b decide their respective operating modes.

Fig. 5 schematically illustrates the driving states of an electric vehicle and the output directions of the electric power converters when control is performed in accordance with the flowchart of Fig. 2 in the present embodiment. During stopping and driving states of the electric vehicle, the output direction is in the forward direction (discharging direction of the storage device 20), and in this case, the electric power converter 16a performs a step-down operation because of Va>Vb and the electric power converter 16b performs a step-up operation because of Va<Vc. On the other hand, in the regeneration state, since the output direction is in the backward direction, the electric power converter 16a performs a step-up operation and the electric power converter 16b performs a step-down operation.

The present embodiment is configured so that the magnitude relations between the voltages between terminals of the storage devices 17, 18 and 20 make the operating modes of the electric power converters 16a and 16b different from each other. Instead, when the output direction of the electric power converters 16a and 16b is the same, for example, discharge current of the storage device 20 can be increased during the driving operation of the driving motor 10 and charge current of the storage device 20 can be increased during the regenerating operation of the driving motor 10, so that self-heating of the storage device 20 can be more promoted.

Further according to the present invention, the storage devices 17 and 18 other than the storage device 20 have similar temperature dependency to that of the storage device 20. Therefore even when the performance decreases in a low temperature, self-heating of these storage devices can be promoted concurrently with the temperature rise of the storage device 20, and so the performance recovery time at the starting from the low temperature can be effectively shortened in the vehicle as a whole.

### [Embodiment 3]

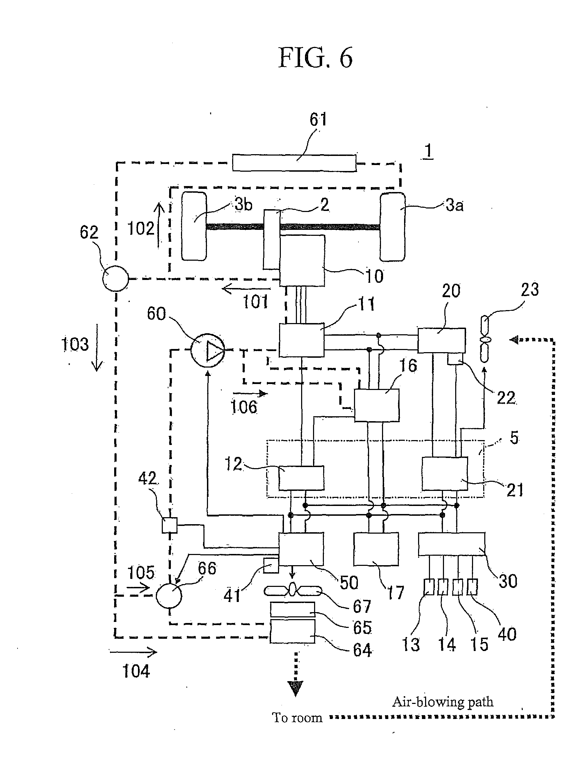

Referring to Fig. 6, the configuration of the present embodiment is described below. The present embodiment is equipped with an exhaust heat recovery mechanism enabling use of heat generation of an electric power converter 16 in addition to temperature rise due to self-heating of a battery. Fig. 6 illustrates the overall configuration of an electric vehicle illustrating a controller for vehicle that is Embodiment 3 of the present invention. In Fig. 6, descriptions on elements with the same reference numerals as those in Fig. 1 are omitted because they have the same functions.

The present embodiment is configured so that heat generated at the electric power converter 16 can be transferred to a storage device 20 via cooling water and air, and is preferably configured capable of using heat generated at a driving motor 10 and an inverter 11 as well. In the configuration of Fig. 6, heat generated at the electric power converter 16 as well as the driving motor 10 and the inverter 11 can be used to increase the temperature of the storage device 20.

A cooling water circuit is a closed circuit where cooling water is circulated by a water pump 60. Cooling water sent out by the water pump 60 partially branches off to flow through a cooling water channel 106, flow through a cooling water channel inside the electric power converter 16 and return to the original cooling water channel. The cooling water after merging flows through a cooling water channel inside the inverter 11 and the driving motor 10. Cooling water flowing through the driving motor 10 passes through cooling water channels 101 and 102 and flows into a radiator 61. The radiator 61 is a heat exchanger to cool cooling water at a high temperature, and cools the cooling water flowing through the radiator 61 by heat exchange with the outside air. The cooling water flowing out from the radiator 61 flows through a cooling water channel 103.

A thermostat 62 has a function of switching channels depending on the temperature of cooling water. When the cooling water is at a low temperature, the thermostat 62 closes the cooling water channel on the radiator side and makes the cooling water channels 101 and 103 communicate with each other. Thereby, heat exchange by the radiator 61 is stopped, and the temperature of the cooling water can be immediately increased when warming is required. The cooling water flowing through the cooling water channel 103 flows through a cooling water channel 104 and returns to the water pump 60 via a heater core 64.

The heater core 64 is a heat source that warms a room of the vehicle using heat of the cooling water. The heater core 64 is a heat exchanger similar to the radiator 61, and blowing air by a blower fan 67 causes heat of the cooling water to be sent to the room via the air. The heater core 64 is disposed inside an air conditioning system for vehicle (not illustrated) in the room and is provided on the downstream side of an evaporator 65 in the flow of the air by the blower fan 67. The evaporator 65 is a heat exchanger that makes up a part of a cooling system (not illustrated).

A channel regulation valve 66 can switch the channel between the cooling water channels 104 and 105 in accordance with a signal from a temperature control ECU 50. Therefore, when heating is required in the room and when the cooling water is at a low temperature, the cooling water channel 104 to the heater core side is closed to let the cooling water flow through the cooling water channel 105, thus preventing cold air from being sent out to the room unnecessarily.

The temperature control ECU 50 is an electronic control unit for control of the temperature of cooling water and the temperature in the room of the vehicle, and receives signals from a cooling water temperature sensor 42 to detect the temperature of cooling water and a room temperature sensor 41 to detect the temperature in the room. The temperature control ECU 50 outputs operating signals to the water pump 60, the channel regulation valve 66 and the blower fan 67 to control the temperature of cooling water on the basis of signals on the cooling water temperature, the room temperature, the outside air temperature and the like and signals from the vehicle control ECU 30. Air in the room can be sent to the storage device 20 by a battery fan 23 under the control of the battery ECU 21.

In the present embodiment, cooling water is warmed using heat generation at the electric power converter 16 and the like, and air to be sent to the room and the storage device 20 is warmed. Thereby, temperature rise at the storage device 20 can be promoted. Heat generation at the electric power converter 16 and the like increases with an increase in current flowing therethrough, and therefore the time for temperature rise of the cooling water can be shortened.

According to the present embodiment, the output direction of the electric power converter 16 is switched depending on the operating state of the driving motor 10. Especially even when the storage device 17 is fully charged at the time of regeneration and auxiliary devices consume less power, the output from the electric power converter 16 is not decreased extremely, which means that the amount of heat generated at the electric power converter 16 can be obtained relatively stably.

Accordingly, when the present invention is applied to an electric vehicle having an exhaust heat recovery system as in Embodiment 3, the following specific effect can be obtained. That is, in addition to the effect of promoting self-heating by the storage device 20, the storage device 20 can be warmed using heat from the cooling water, and therefore the temperature of the storage device 20 can be increased more effectively.

### [Embodiment 4]

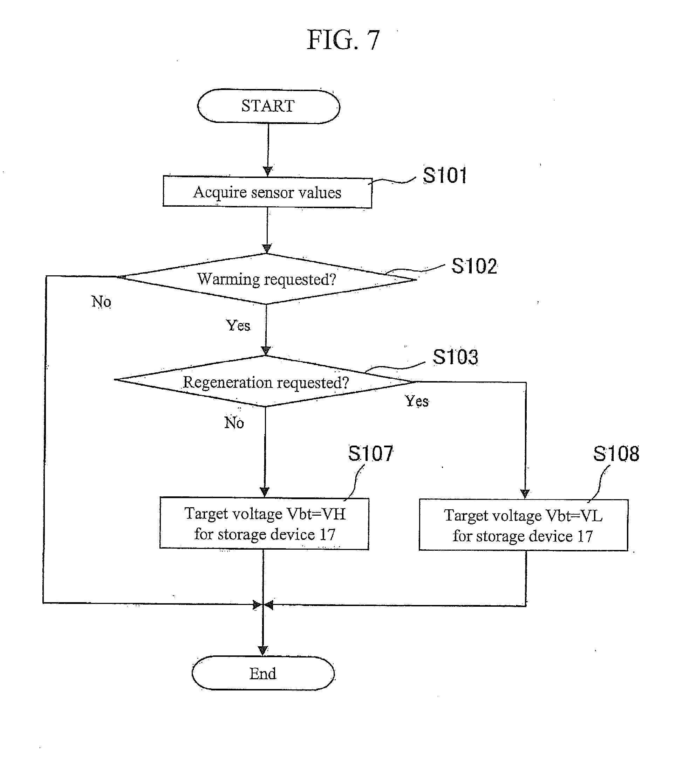

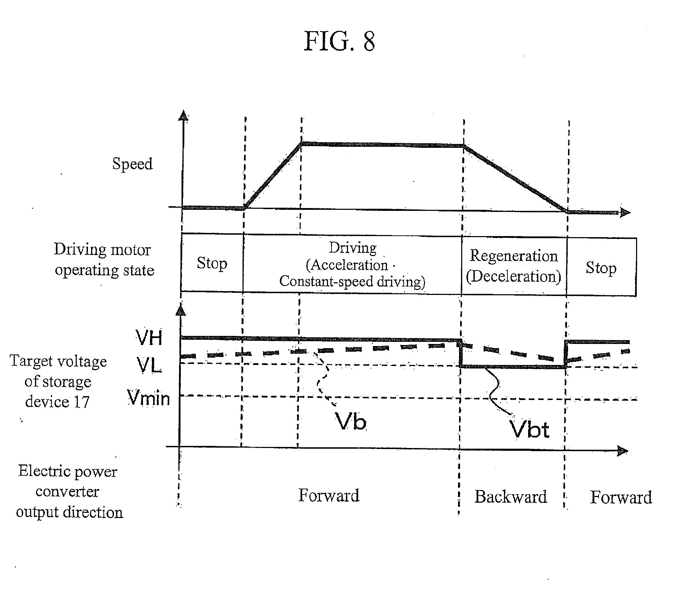

Referring to Fig. 7 and Fig. 8, another embodiment of a method for controlling an electric power converter is described below. In the present embodiment, an electric vehicle is configured similarly to that of Fig. 1. Fig. 7 is a flowchart illustrating another embodiment of a method for controlling an electric power converter. In the flow chart of Fig. 7, Steps S101 to S102 are the same processing as in Fig. 2, and their descriptions are omitted.

At Step S103, similarly to Embodiment 1, when a driving motor 10 stops or performs a driving operation, i.e., in the case of negative determination, the procedure proceeds to Step S107. On the other hand, when the driving motor 10 performs a regenerating operation, i.e., in the case of affirmative determination, the procedure proceeds to Step S108.

At Step S107, target voltage Vbt of a storage device 17 is set at VH and the procedure ends once. On the other hand, at Step S108, the target voltage Vbt of the storage device 17 is set at VL and the procedure ends once. VH and VL are set in the range such that the storage devices and vehicle-mounted devices using the storage devices as a power supply can operate normally and so that VH>VL.

In the present embodiment, the target voltage between terminals Vbt of the storage device 17 is set for the electric power converter 16, and the electric power converter 16 controls charge/discharge current of the storage device 17 so that the voltage between terminals Vb of the storage device 17 becomes the target voltage Vbt. Therefore, conversion electric power (including the output direction) of the electric power converter 16 can be controlled on the basis of the magnitude relation between the voltage between terminals Vb and the target voltage Vbt.

Fig. 8 schematically illustrates the driving states of an electric vehicle and the output directions of the electric power converter when control is performed in accordance with the flowchart of the present embodiment. During stopping and driving of the electric vehicle, the target voltage Vbt of the storage device 17 is set at VH, and control is performed so that the voltage between terminals Vb becomes Vbt. At this time, since Vb<Vbt (=VH), the storage device 17 has to be charged until the voltage between terminals Vb of the storage device 17 becomes the target voltage Vbt=VH, which means that the electric power converter 16 operates in the forward direction. Therefore, during stopping and a driving operation, the electric power converter 16 is controlled so as to supply electrical energy of the storage device 20 to the storage device 17. On the other hand, during regeneration, since Vb>Vbt (=VL), the storage device 17 has to be discharged until the voltage between terminals Vb of the storage device 17 becomes the target voltage Vbt=VL, which means that the electric power converter 16 operates in the backward direction. Therefore, during a regenerating operation, the electric power converter 16 is controlled so as to supply electrical energy of the storage device 17 to the storage device 20. Herein, Vmin may be decided with consideration given to lower limit voltage of the storage device 17 and lower limit voltage of a vehicle-mounted device using the storage device 17 as a power supply to ensure the operation of the vehicle-mounted device, and VL is preferably set at a value larger than the lower limit voltage (Vmin).

The effects specific to the present invention can be obtained from the configuration as in Embodiment 4 as well, where the voltage between terminals of the storage device 17 is set in accordance with the operating state of the driving motor 10, and in order to control the voltage between terminals, the electric power converter 16 controls the conversion electric power and the output direction. That is, during stopping or driving of the electric vehicle 1, the electric power converter 16 is controlled to operate in the forward direction, and so electrical energy of the storage device 20 is supplied to the storage device 17. Thereby, the storage device 17 and the storage device 20 can be warmed quickly. During regeneration of the electric vehicle 1, the electric power converter 16 is controlled to operate in the backward direction, and so electrical energy of the storage device 17 is supplied to the storage device 20. Thereby, the storage device 17 and the storage device 20 can be warmed quickly.

The present invention is not limited to the aforementioned embodiments, and the design can be variously modified within the scope thereof. For example, the calculation part of the flowchart to decide the output directions of the electric power converters 16, 16a and 16b in the above embodiments may be implemented using a microcomputer mounted on the electric power converters 16, 16a and 16b for calculation. Alternatively, a microcomputer is mounted for calculation on the vehicle control ECU 30 or the temperature control ECU 50, and an instruction is sent to the electric power converter via the vehicle network so that the electric power converter operates in accordance with the instruction.

The above describes the example where the electric power converters 16, 16a and 16b are controlled by the motor ECU 12. Needless to say, these electric power converters may be controlled by other ECUs such as the vehicle control ECU 30. Further, although the above describes the example using an electric vehicle as a vehicle, the present invention is applicable also to a hybrid vehicle equipped with an internal-combustion engine together with a driving motor.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A controller for vehicle, comprising: a driving motor (10), first storage means that exchanges electrical energy with the driving motor (10); temperature detection means that detects a temperature of the first storage means; second storage means that exchanges electrical energy with the first storage means; and an electric power converter that controls exchange of electrical energy between the first storage means and the second storage means, wherein
when the temperature detection means detects a temperature lower than or equal to a predetermined value and the driving motor (10) performs a regenerating operation, the electric power converter supplies electrical energy of the second storage means to the first storage means.

2. The controller for vehicle according to claim 1, comprising a plurality of storage means as the second storage means, wherein
when the temperature detection means detects a temperature lower than or equal to a predetermined value and the driving motor (10) performs a regenerating operation, the electric power converter supplies electrical energy of at least one of the plurality of second storage means to the first storage means.

3. The controller for vehicle according to claim 1, wherein
when the temperature detection means detects a temperature lower than or equal to a predetermined value and the driving motor (10) performs a regenerating operation, the electric power converter sets target voltage of the second storage means at first target voltage,
when the temperature detection means detects a temperature lower than or equal to a predetermined value and the driving motor (10) performs a driving operation, the electric power converter sets target voltage of the second storage means at second target voltage that is higher than the first target voltage, and
an output from the electric power converter is controlled in accordance with the first and second target voltages of the second storage means.

4. The controller for vehicle according to claim 1, further comprising heat recovery means that recovers at least one of heat generated at the driving motor and heat generated at the electric power converter, wherein
the heat recovery means transfers the recovered heat to the first storage means.

5. The controller for vehicle according to claim 4, further comprising an invertor to drive the driving motor, wherein the heat recovery means comprises a function to recover heat generated at the invertor, and transfers the recovered heat generated at the invertor to the first storage means.

6. A vehicle comprising the controller for vehicle according to any one of claims 1 to 5.
